(19) **Europäisches Patentamt**
**European Patent Office**
**Office européen des brevets**

(11) **EP 2 053 758 B1**

(12) **EUROPEAN PATENT SPECIFICATION**

(45) Date of publication and mention
of the grant of the patent:
**13.07.2011 Bulletin 2011/28**

(51) Int Cl.:
**H04B 7/005** (2006.01)　　**H04W 36/18** (2009.01)

(21) Application number: **07721002.9**

(22) Date of filing: **28.04.2007**

(86) International application number:
**PCT/CN2007/001429**

(87) International publication number:
**WO 2008/019557 (21.02.2008 Gazette 2008/08)**

(54) **A MOBILE COMMUNICATION SYSTEM, INTERFERENCE OF NEIGHBORHOOD INHIBITING METHOD AND BASE STATION NODE IN THE SYSTEM**

MOBILKOMMUNIKATIONSSYSTEM, VERFAHREN ZUR UNTERDRÜCKUNG VON STÖRUNGEN AUS DER NACHBARSCHAFT UND BASISSTATIONSKNOTEN IN DEM SYSTEM

SYSTÈME DE COMMUNICATION MOBILE, PROCÉDÉ D'INHIBITION DES INTERFÉRENCES DE VOISINAGE ET NOEUD DE STATION DE BASE FAISANT PARTIE DU SYSTÈME

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.08.2006　CN 200610110573**

(43) Date of publication of application:
**29.04.2009 Bulletin 2009/18**

(73) Proprietor: **Huawei Technologies Co., Ltd.**
**Longgang District, Shenzhen**
**Guangdong 518129 (CN)**

(72) Inventor: **LI, Rongqiang**
**Guangdong 518129 (CN)**

(74) Representative: **Kreuz, Georg Maria**
**Huawei Technologies Duesseldorf GmbH**
**Dessauerstrasse 3**
**80992 München (DE)**

(56) References cited:
**EP-A1- 1 148 658　　CN-A- 1 437 415**
**CN-A- 1 474 527　　JP-A- 2005 303 539**
**US-A1- 2003 022 685　　US-A1- 2004 160 914**

- **ERICSSON: "Enhanced Uplink - Scheduling" 3GPP DRAFT; R1-040683, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Cannes; 20040618, 18 June 2004 (2004-06-18), XP050112103 [retrieved on 2004-06-18]**

## Description

### Field of the Invention

The present invention relates to the mobile communication field, especially to a neighboring cell interference suppression technique, and in particular to a mobile communication system, a neighboring cell interference suppression method and a base station in the mobile communication system.

### Background of the Invention

As an important organization in the mobile communication field, the 3rd Generation Partnership Project (3GPP), has driven the standardization of the 3rd Generation (3G) mobile communication techniques. In the earlier versions of 3GPP, both uplink and downlink services are carried out through dedicated channels; and in Release 99 (R99), both the uplink and the downlink transmission rates could reach to 384Kbps.

With the development of the mobile communication techniques, the 3G techniques are also developing and evolving continuously. In 3GPP Release 6 (R6), a High Speed Uplink Packet Access (HSUPA) technique is introduced. The HSUPA technique employs a shorter Transmission Time Interval (TTI) and frame length (2ms or 10ms) to implement fast self-adaptive control, and employs a Hybrid Automatic Retransmission Request (HARQ) and base station (NodeB) based fast uplink dispatching technique to improve uplink frequency spectrum efficiency.

In the HSUPA technique, in order to implement an efficient uplink data transmission and uplink power control, two uplink physical channels and three downlink physical channels are added, namely: an uplink Enhanced-DCH Dedicated Physical Data Channel (E-DPDCH) designed to carry subscriber data; an uplink Enhanced-DCH Dedicated Physical Control Channel (E-DPCCH) designed to transmit associated physical layer signaling and provide the associated signaling for E-DPDCH demodulation; an Enhanced-DCH Absolute Grant Channel (E-AGCH) and an Enhanced-DCH Relative Grant Channel (E-RGCH), designed to control a subscriber's uplink data transmission rate; and an Enhanced-DCH Hybrid ARQ Indicator Channel (E-HICH) designed to indicate whether a uplink data transmission is correct.

The E-AGCH only exists in a serving radio access cell, and is designed to indicate a maximum uplink transmission rate, and can be adjusted at a low frequency; the E-RGCH may exist in a serving radio access cell or a non-serving radio access cell, and is designed to instruct a subscriber to adjust an uplink transmission rate with a certain step length, and can be adjusted at a higher frequency up to a maximum of once per TTI. In the HSUPA technique, the subscriber learns from the E-HICH whether data is received correctly or not. If the data is not received correctly, a retransmission is initiated; otherwise, new data is transmitted.

At the same time when the HSUPA technique is introduced, the 3GPP launches a Long Term Evolution (LTE) project in the second half-year of 2004 in order to ensure competitive force thereof for a longer period (for example, 10 years or longer).

During the evolution process of the LTE, the three-layer nodal network structure (NodeB, Radio Network Controller (RNC), and Core Net (CN) in the existing Wideband Code Division Multiple Access (WCDMA) network is simplified into a two-layer nodal structure, in which the RNC function is distributed to NodeBs (here referred to as Evolved NodeB, also as eNodeB)) and nodes on higher layers (e.g. Gateway (GW)).

Similar to the NodeB in the existing WCDMA network, each eNodeB covers one or more cells, with neighboring cells overlapping partially (up to about 30%) at the borders thereof.

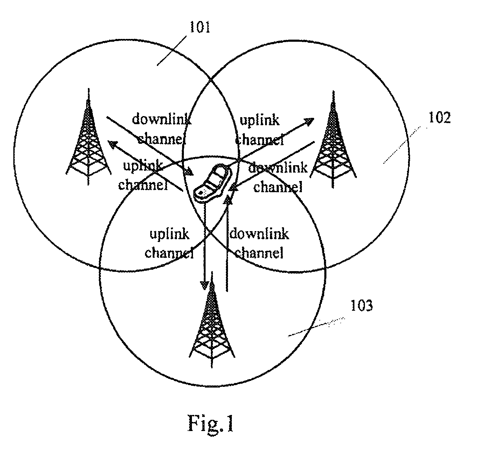

In the WCDMA network, when a User Equipment (UE) moves from a source cell towards a target cell, the strength of signals from the source cell diminishes; therefore, cross-cell handover needs to be carried out in the overlap area between the source cell and the target cell. The UE in the cross-cell handover state communicates with multiple NodeBs involved in the cross-cell handover, i.e. the UE can receive signals from the NodeBs in different cells and can also transmit signals to the NodeBs in different cells. As shown in Fig.1, the UE in the cross-cell handover state establishes connections to the NodeBs in the three neighboring cells 101, 102, and 103; a signal transmitted from the UE is received by the three NodeBs via uplink channels and transmitted to the RNC (not shown) after being demodulated; the RNC combines the data from the three channels, so as to improve quality of the uplink signal. Similarly, downlink signals are transmitted via the three NodeBs to the UE; the UE combines the signals from the three channels, so as to improve quality of the received signals and prevent data loss during the cross-cell handover. Such a signal combining technique is referred to as macro diversity, and the switching technique is referred to as cross-cell soft handover.

Because the uplink signal is transmitted from the UE to different cells at the uplink channel transmit power of the UE, and when the uplink channel transmit power of the UE is too high, the uplink signal of the UE may bring more interference with uplink data transmission of other UEs in the entire cell, and therefore results in degraded quality of data transmission from other UEs in the cell or even results in call drops.

In the prior art, when a soft handover is carried out for a UE in a connected state, there is a need to establish connections between the UE and respective cells corresponding to overlap areas involved in the soft handover and to control the uplink power of the UE, so as to avoid any UE interference with each of the respective cells. Specifically, in the soft handover process, the UE detects downlink pilot signals from neighboring cells and reports the downlink pilot signals from the neighboring cells to the RNC; the RNC receives and judges the information. If it is determined from list of the downlink pilot signals from the neighboring cells reported by the UE that a cell meets a soft handover threshold, the RNC determines that a new radio link needs to be established in the new cell for the UE, and the RNC initiates a radio connection setup request to the NodeB in the cell, requesting the NodeB to allocate resources to the new radio connection to be established. When the NodeB receives the request, it judges whether there are available resources for the moment; if there are available resources, the request is accepted, and the RNC and the NodeB allocate resources required for the establishment of the connection to the UE, and establish the connection between the UE and the NodeB in the cell; or if the NodeB is accessed by many UEs at present and has no available resources, the request is rejected. In this case, the RNC refuses to establish a radio link in the new cell for the UE. If a radio connection is established successfully between the UE and the cell, the cell can control the uplink channel transmit power of the UE to be within a reasonable range by utilizing inner ring power control and outer ring power control by means of an uplink Transmit power Control (TPC) command or downlink power adjustment indication, so that the UE, when it is in the overlap area and under a soft handover, does not cause interference with the neighboring cells.

However, in practical applications, when the UE is in a soft handover state, the existing uplink transmit power control method in the prior art may be unable to effectively avoid interference with the cells to which the overlap area involved in the soft handover belongs , and is not applicable to an LTE evolved network.

And in the prior art US 2004/0160914A1, techniques for congestion control are disclosed. In one embodiment of the prior art, a base station allocates a shared resource using a combination of zero or more individual grants and zero or more common grants, and generates a busy signal in response to loading conditions that exceed a pre-determined level. In another embodiment, a subset of transmitting mobile stations reduces their transmission rate in response to a busy signal.

Additionally, in another prior art "ERICSSON: "Enhanced Uplink-Scheduling", 3GPP DRAFT; R1-040683, 3RD GENERATION PARTNERSHIP PROJECT(3GPP), MOBILE COMPETENCE CENTRE; 650, ROUTE DES LUCIOLES; F-06921 SOPHIA-ANTIPOLIS CEDEX; FRANCE, vol. RAN WG1, no.Cannes;20040618,18 June 2004(2004-06-18), XP050112103 [retrieved on 2004-06-18]", an enhanced uplink scheduling scheme is disclosed.

The inventor has found that the main reason for this situation lies in that: in the prior art, in order to control the uplink channel transmit power of the UE, a NodeB has to establish a radio connection to the UE first; however, due to limited uplink demodulation resources of the NodeB in the neighboring cell, some cells involved in the soft handover may be unable to establish a radio connection to the UE. In that case, the NodeB is unable to control the uplink channel transmit power of the UE, and therefore the uplink channel transmit power of the UE may be too high and cause interference with the cell, thereby resulting in degraded system performance of the cell and a risk of system instability.

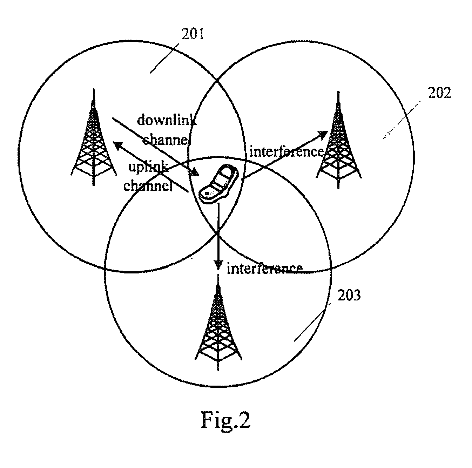

Furthermore, in the LTE evolution process, the RNC function in the existing network is distributed to eNodeBs and nodes on higher layers (e.g. GW). In such a situation, the UE can only keep a radio connection to the NodeB in one cell 201 when the UE transmits data in any overlap area, as shown in Fig.2, while the other cells 202 and 203 having the overlap area are unable to establish a radio connection to the UE by means of technique in the prior art to control the uplink channel transmit power; therefore, the UE interference with the neighboring cells can not be avoided.

## Summary of the Invention

The present invention provides a mobile communication system, a neighboring cell interference suppression method and a base station in the mobile communication system, which enables the base station to improve system stability and accuracy in fast dispatching.

A neighboring cell interference suppression method in a mobile communication system includes:

configuring, in a non-serving radio link established for a UE, an uplink channel for estimation of contribution of the UE to uplink load in a cell and a downlink channel for control of transmit power of the UE; and

estimating the contribution of the UE to the uplink load in the cell in accordance with signals received through the uplink channel and controlling the transmit power of the UE by means of the downlink channel based on the estimation result.

A base station includes:

a first channel establishing module, configured to establish, in a non-serving radio link established for a UE, an uplink channel for estimation of contribution of the UE to uplink load in a cell and a downlink channel for control of transmit power of the UE;

an estimate module, configured to estimate contribution of the UE to uplink load in the cell with signals received through the uplink channel established by the first channel establishing module; and

a control module, configured to control the transmit power of the UE by means of the downlink channel based on an estimation result provided by the estimating module.

A mobile communication system includes a UE and a base station, in which the base station includes:

a first channel establishing module, configured to establish, in a non-serving radio link established for the UE, an uplink channel for estimation of contribution of a UE to uplink load in a cell and a downlink channel for control of transmit power of the UE;

an estimate module, configured to estimate the contribution of the UE to the uplink load in the cell based on signals received through the uplink channel established by the first channel establishing module; and

a control module, configured to control the transmit power of the UP by means of the downlink channel based on an estimation result provided by the estimating module.

In embodiments of the present invention, only a control plane connection is established for a UE in the non-serving radio link established for the UE by the base station, and the contribution of the UE to the uplink load in the cell is estimated by means of an uplink channel established for the UE, so that the contribution of the UE in the neighboring cell to the uplink load becomes predictable; and the transmit power of the UE can be controlled based on the estimation result by means of the downlink channel established for the UE, and thereby the interference from the neighboring cells to which the overlap area belongs can be suppressed effectively, and the system stability and accuracy in fast dispatching by a base station can be improved.

## Brief Description of the Drawings

Fig.1 is a schematic diagram of a connection between a UE in the overlap area and a NodeB, in a WCDMA network, in the prior art;

Fig.2 is a schematic diagram of a connection between a UE in the overlap area and a NodeB, in an LTE evolved network, in the prior art;

Fig.3 is a schematic diagram of a connection between a UE in the overlap area and a NodeB in a interference suppression method for suppressing neighboring cell interference in a mobile communication system according to the present invention;

Fig.4 is a flow diagram of a interference suppression method for suppressing neighboring cell interference in a mobile communication system according to a first embodiment of the present invention;

Fig.5 is a flow diagram of a interference suppression method for suppressing neighboring cell interference in a mobile communication system according to a second embodiment of the present invention;

Fig.6 is a structural block diagram of a NodeB according to a third embodiment of the present invention; and

Fig.7 is a structural block diagram of a NodeB according to a fourth embodiment of the present invention.

## Detailed Description of the Embodiments

Hereunder embodiments of the present invention are further detailed with reference to the accompanying drawings.

In an embodiment of the present invention, in an overlap area of neighboring cells, a non-serving radio link established by a NodeB for a UE only includes a control plane connection, the contribution of the UE to the uplink load of the cell is estimated by means of the control plane connection, and the transmit power of the UE is controlled by means of the control plane connection.

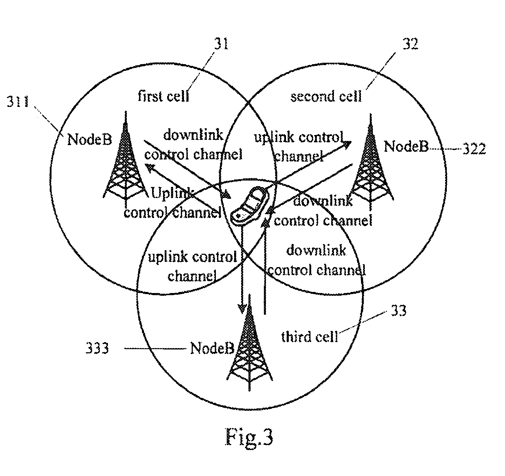

As shown in Fig.3, the UE is in the overlap area of the first cell 31, the second cell 32 and the third cell 33, and establishes radio links to the NodeBs in the respective three cells. For the UE, the first cell 31 is a serving cell, and a serving radio link, which includes both uplink channel and downlink channel, is established between the UE and the first NodeB 311 in the first cell 31; for the UE, the second cell 32 and the third cell 33 are non-serving cells, and non-serving radio links, which only include an uplink channel and downlink channel in the control plane, are established respectively between the UE and the second NodeB 322 in the second cell 32 and between the UE and the third NodeB 333 in the third cell 33. Take the second NodeB 322 as an example, in establishing the non-serving radio link, the second NodeB 322 only establishes an uplink channel that is designed for estimation of the contribution of the UE to the uplink load in the cell 2 and a downlink channel that is designed for control of the transmit power of the UE. The second NodeB 322 estimates the contribution of the UE to the uplink load in the cell 2 based on signals received through the uplink channel, and controls the transmit power of the UE through the downlink channel based on the estimation result. Therefore, while the resources required for establishment of the radio links are reduced, interference from the neighboring cells to which the overlap area belongs can be effectively suppressed, thus improving system stability and accuracy in fast dispatching by the NodeB.

Hereunder, the neighboring cell interference suppression method in a mobile communication system according to the first embodiment of the present invention is described.

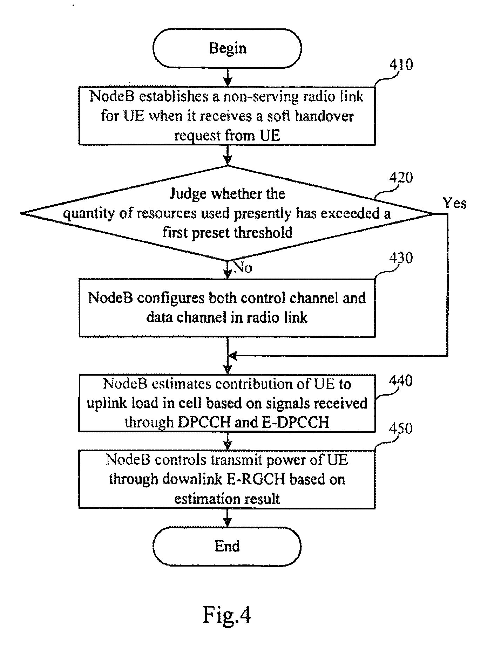

As shown in Fig.4:

In step 410, when the NodeB receives a soft handover request from the UE, it establishes a non-serving radio link for the UE.

The non-serving radio link is a radio link that includes an Enhanced-Dedicated Channel (abbreviated as E-DCH). The NodeB only sets in the radio link an uplink channel (e.g. uplink DPCCH or uplink E-DPCCH) designed for estimation of the contribution of the UE to the uplink load in the cell, and a downlink channel (e.g. downlink E-RGCH, F-DPCH, or DPDCH) designed for control of the transmit power of the UE. In practical applications, the downlink channel that is used by a non-serving cell to control the transmit power of the UE is a downlink E-RGCH. Similarly, one of the F-DPCH and the DPDCH can be elected and established, depending on the actual capability of the NodeB. Because the non-serving radio link established by the NodeB for the UE only includes control plane connections, the NodeB can control the transmit power of the UE through the control plane connections and avoid interference with its subordinate cells, even if the E-DPDCH demodulation resources are used up.

In step 420, the NodeB judges whether the quantity of currently used resources has exceeded a preset threshold; if not, the NodeB proceeds with step 430; or if yes, the NodeB goes to step 440 directly.

In step 430, the NodeB sets both control channel and data channel in the radio link.

The NodeB sets both control channel and data channel in the radio link, including each of the control channels that are set in step 410 and the E-DPDCH for receiving uplink data, so as to make a full use of the demodulation resources for high-speed uplink data packets access and avoid resource waste. The specific method of setting the channels can be carried out with reference to the method for setting relevant channels in the Enhanced-DCH in the prior art, and is not described further here.

In step 440, the NodeB estimates the contribution of the UE to the uplink load in the cell based on the signals received through the DPCCH and the uplink E-DPCCH.

Specifically, the NodeB estimates an $SIR_{DPCCH}$ of the uplink DPCCH based on the pilot frequency information of the uplink DPCCH, and the specific method thereof is the same as that in the prior art.

The NodeB obtains the power control gain factor $\beta_{E\text{-}DPDCH}$ of the uplink E-DPDCH relative to the uplink DPCCH, based on data transmission format signaling information of the uplink E-DPDCH indicated in the current uplink E-DPCCH and reference transmission format information configured for the network. The specific method thereof is the same as that in the prior art.

Next, the NodeB calculates an $SIR_{E\text{-}DPDCH}$ of the uplink E-DPDCH using the expression

$$SIR_{E-DPDCH} = SIR_{DPCCH} \cdot \left(\frac{\beta_{E-DPDCH}}{\beta_{DPCCH}}\right)^2,$$ based on the obtained $SIR_{DPCCH}$ of the uplink DPCCH of the UE, the power control gain factor $\beta_{E\text{-}DPDCH}$ of the uplink E-DPDCH relative to the uplink E-DPDCH, and the gain factor parameter $\beta_{DPCCH}$ of the uplink DPCCH pre-configured in the network.

Next, the NodeB calculates the power control gain factor $\beta_{E\text{-}DPCCH}$ of the uplink E-DPCCH relative to the uplink DPCCH using the expression $\beta_{E-DPCCH} = \beta_{DPCCH} \cdot 10^{\left(\frac{\Delta_{E-DPCCH}}{20}\right)},$ based on the power deviation parameter

$\Delta_{E\text{-}DPCCH}$ of the uplink E-DPCCH relative to the uplink DPCCH that is pre-configured in the radio network and the gain factor parameter $\beta_{DPCCH}$ of the uplink DPCCH. The NodeB further obtains the $SIR_{E\text{-}DPCCH}$ of the uplink E-DPCCH using the expression $SIR_{E-DPCCH} = SIR_{DPCCH} \cdot \left(\frac{\beta_{E-DPCCH}}{\beta_{DPCCH}}\right)^2,$ based on the power control gain factor $\beta_{E\text{-}DPCCH}$, the

estimated $SIR_{DPCCH}$ of the uplink DPCCH, and the gain factor $\beta_{DPCCH}$ of the uplink DPCCH that is pre-configured in the network.

If the uplink data transmission channel of the UE only includes an uplink E-DPDCH, the NodeB obtains the contribution of the UE to the uplink load in the cell using the expression

$$\text{contribution\_to\_uplink\_load} = \frac{(SIR_{DPCCH} + SIR_{E-DPCCH} + SIR_{E-DPDCH})}{1 + (SIR_{DPCCH} + SIR_{E-DPCCH} + SIR_{E-DPDCH})},$$ based on the calculat-

ed $SIR_{DPCCH}$, $SIR_{E\text{-}DPDCH}$, and $SIR_{E\text{-}DPDCH}$ of the DPCCH, E-DPDCH, and E-DPCCH respectively. If the uplink data transmission channel of the UE includes an uplink E-DPDCH and an uplink DPDCH, the NodeB needs to calculate the

$SIR_{DPDCH}$ of the uplink DPDCH using the expression $SIR_{DPDCH} = SIR_{E-DPCCH} \cdot (\dfrac{\beta_{DPDCH}}{\beta_{E-DPCCH}})^2$ , based on the above calculated $SIR_{E-DPCCH}$ of the E-DPCCH, the power control gain factor UE$\beta_{E-DPDCH}$ of the uplink E-DPDCH relative to the uplink DPCCH, and the gain factor parameter $\beta_{DPDCH}$ of the uplink DPDCH that is pre-configured in the network. Based on the $SIR_{DPDCH}$, and the $SIR_{DPCCH}$, $SIR_{E-DPDCH}$, and $SIR_{E-DPCCH}$ as calculated above, the NodeB obtains the contribution of the UE to the uplink load in the cell using the expression

$$\text{Contribution\_to\_uplink\_load} = \frac{(SIR_{DPCCH} + SIR_{DPDCH} + SIR_{E-DPCCH} + SIR_{E-DPDCH})}{1 + (SIR_{DPCCH} + SIR_{DPDCH} + SIR_{E-DPCCH} + SIR_{E-DPDCH})}.$$

In step 450, the NodeB controls the transmit power of the UE via the downlink E-RGCH, based on the estimation result of contribution of the UE to the uplink load in the cell.

Specifically, if the NodeB estimates that the UE interference with uplink load in the cell is too high, it sends a Relative Grant (RG) command via the downlink E-RGCH, to instruct the UE to decrease the uplink data transmission rate, thereby reducing the uplink data transmission interference with the cell. So there is no need to improve the transmit power of other UEs in the cell, and thus the system stability and stability of the subscriber data transmission can be ensured and the system capacity can be improved. Or if the NodeB estimates that the UE interference with the uplink load in the cell is not too high, the NodeB does not need to send a downlink E-RGCH indication message.

It is worthwhile to mention that: in the embodiment of the present invention, the established non-serving radio link may not include a channel for data transmission, in order to reduce resources required for the establishment of the radio link. Therefore, when the UE carries out a soft handover for uplink serving cell update, it needs to determine whether the radio link between the UE and the target cell only includes an uplink channel for estimation the contribution of the UE to the uplink load in the cell and a downlink channel for controlling the transmit power of the UE; if the radio link only includes such an uplink channel and downlink channel, an associated channel for transmitting data (e.g. an uplink E-DPDCH) is required to be added in the radio link before the soft handover is started, so as to ensure that the UE can communicate normally after it is switched to the target cell.

A neighboring cell interference suppression method in the mobile communication system according to the second embodiment of the present invention is essentially identical to the method according to the first embodiment. However, in point of the application environment, the first embodiment is mainly applied in a network that employs the uplink macro diversity technique, while the second embodiment is mainly applied in a network where the uplink macro diversity technique is cancelled.

In the LTE evolved network, the uplink macro diversity is canceled in the system architecture, i.e. in the network, a UE in the overlap area can only establish a data transmission plane connection to its serving cells. In view of this change, this embodiment enables a NodeB in a non-serving cell (also referred to as eNodeB) to control transmit power of UEs in the neighboring cells to which the overlap area belongs by only establishing a control plane connection between the UE and the NodeB, thereby avoiding interference with the local cell from the UEs in the neighboring cells to which the overlap area belongs.

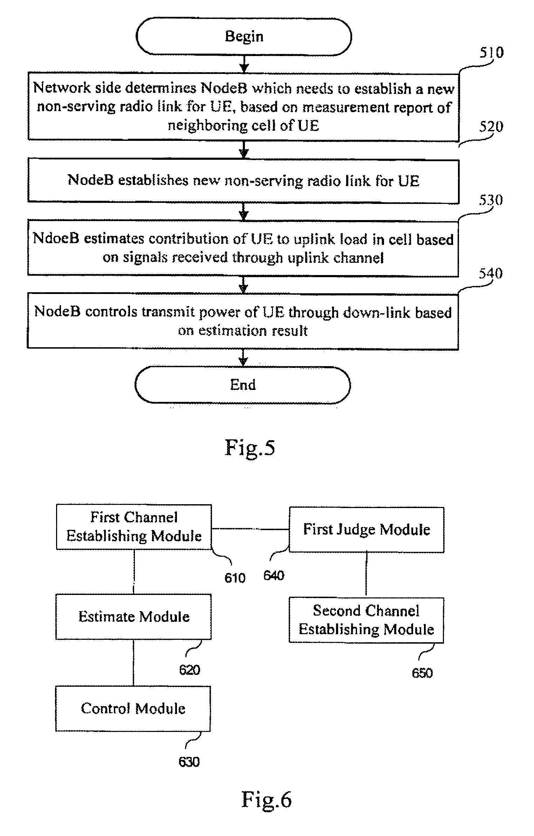

Specifically, as shown in Fig.5:

In step 510, the network side determines, based on a neighboring cell measurement report from the UE, a NodeB which is required to establish a non-serving radio link for the UE, and instructs the NodeB to establish the non-serving radio link for the UE.

Then, in step 520, the NodeB establishes a non-serving radio link for the UE, and only an uplink channel for estimation of the contribution of the UE to the uplink load in the cell and a downlink channel for control of the transmit power of the UE are set in the radio link.

Next, the process goes to step 530, in which the NodeB estimates the contribution of the UE to the uplink load in the cell, based on a signal received through the uplink channel.

The specific estimation method is similar to that in the first embodiment, and is not described here. In this embodiment, because there is no need to establish an associated channel for data transmission between the non-serving NodeB and the UE, the non-serving NodeB still can accurately estimate interference with the local cell from UEs of the neighboring cells to which the overlap area belongs, by means of the established control plane connection to the UE, even if the uplink macro diversity technique is canceled from the system architecture. Because only the control plane connection is established between the non-serving NodeB and the UE, the resources in the subscriber plane (e.g. non-serving NodeB resources and lub transmission, etc.) will not be occupied, and therefore the system performance can be improved and the system stability can be achieved with less hardware resource consumption.

Next, the process goes to step 540, in which the 540 controls the transmit power of the UE by means of the downlink channel according to the estimation result.

The NodeB does not need to increase transmit power of other UEs in the cell, and therefore the system stability and subscriber data transmission stability can be ensured, and the system capacity can be improved.

Fig.6 is a structural block diagram of a NodeB according to the third embodiment of the present invention. In addition to the basic modules in the prior art, the NodeB in the third embodiment of the present invention further includes a first channel establishing module 610, an estimating module 620, a control module 630, a first judge module 640 and a second channel establishing module 650.

The first channel establishing module 610 is configured to establish a non-serving radio link for a UE, in which only an uplink channel for estimation of the contribution of the UE to the uplink load in the cell and a downlink channel for control of the transmit power of the UE are configured.

The estimating module 620 is configured to estimate the contribution of the UE to the uplink load in the cell based on a signal received through the uplink channel established by the first channel establishing module 610.

The control module 630 is configured to control the transmit power of the UE via the downlink channel based on an estimation result of the estimating module 620.

The first judge module 640 is configured to judge whether the radio link established between the UE and the target cell only includes the uplink channel for estimation of the contribution of the UE to the uplink load in the cell and the downlink channel for control of the transmit power of the UE.

The second channel establishing module 650 is configured to receive an indication from the first judge module 640 and add an associated channel for data transmission in the radio link.

The radio link is one that includes Enhanced-Dedicated Channels. The uplink channel includes an uplink Dedicated Physical Control Channel and an uplink Enhanced-Dedicated Physical Control Channel, and the downlink channel includes a downlink Relative Grant Channel, a downlink Fractional-Dedicated Physical Channel, or a downlink Dedicated Physical Channel.

Specifically, when the NodeB receives a switching request from the UE in the overlap area, it instructs the first channel establishing module 610 to establish a non-serving radio link for the UE. The first channel establishing module 610 only establishes an uplink channel for estimation of the contribution of the UE to the uplink load in the cell and a downlink channel for control of the transmit power of the UE. Next, the estimate module 620 estimates the contribution of the UE to the uplink load in the cell based on a signal received through the uplink channel established by the first channel establishing module 610, and instructs the control module 630 of the estimation result. The control module 630 controls the transmit power of the UE via the downlink channel based on the estimation result provided by the estimating module 620, and thereby the interference from the neighboring cells to which the overlap area belongs is effectively suppressed and the accuracy in fast dispatching by the NodeB is improved without increasing transmit power of other UEs in the cell, and the system stability and the subscriber data transmission rate stability can be ensured.

In addition, in the embodiments of the present invention, in order to reduce the resources required for establishment of the radio link, the established non-serving radio link doesn't include a channel for data transmission. Therefore, when the UE carries out a soft handover, it is required to judge by the first judging module 640 whether the radio link between the UE and the target cell only includes an uplink channel for estimation of the contribution of the UE to the uplink load in the cell and a downlink channel for control of the transmit power of the UE. If the radio link only includes the uplink channel and the downlink channel, the first judging module 640 instructs the second channel establishing module 650 to add in the radio link an associated channel for data transmission, so as to ensure that the UE can communicate normally after it is switched to the target cell.

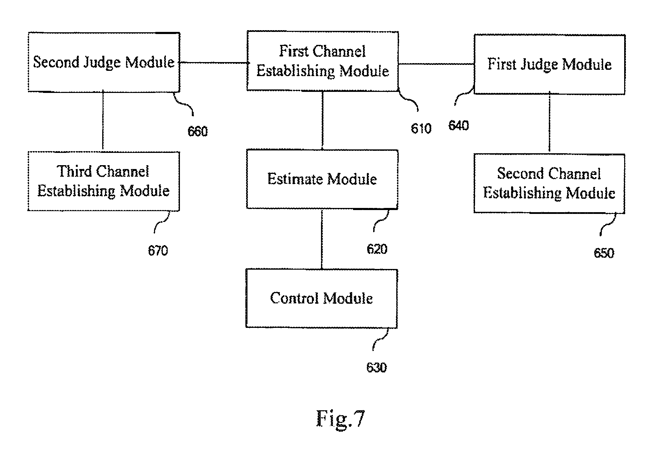

Fig.7 shows a structural block diagram of a NodeB according to the fourth embodiment of the present invention. In addition to the modules in the third embodiment, the fourth embodiment of the present invention further includes a second judge module 660 and a third channel establishing module 670.

The second judge module 660 is configured to judge whether the quantity of resources currently used by the UE has exceeded a preset threshold;

The third channel establishing module 670 is configured to configure both control channel and data channel in the established non-serving radio link when the second judging module 660 determines that the quantity of resources currently used by the UE has not exceeded the preset threshold.

For other modules of the fourth embodiment of the present invention, please refer to the description of the third embodiment. These modules are not described further here.

According to embodiments of the present invention, when a NodeB establishes a non-serving radio link for the UE, only a control plane connection is established, and the contribution of the UE to the uplink load in the cell is estimated by means of the established uplink channel so that the contribution of UEs in the neighboring cells to the uplink load becomes predictable, and the transmit power of the UE can be controlled by means of the established downlink channel based on the estimation result, and thereby interference from the neighboring cells to which the overlap area belongs can be suppressed effectively, and the system stability and accuracy in fast dispatching by the NodeB can be improved.

If the non-serving radio link becomes a serving radio link during the handover, a channel for carrying data is added to the radio link, so as to ensure the UE can communicate normally after the UE is switched to the new serving radio link.

For the existing HSUPA system, when a NodeB receives a soft handover request from a UE in a neighboring cell, it establishes for the UE a non-serving radio link that only includes a control plane connection. Therefore, even if the E-DPDCH demodulation resources are used up, the contribution of the UE in the overlap area involved in the soft handover to the uplink load in the cell can be estimated accurately by means of the established control plane connection. If the uplink load of the UE in the overlap area involved in the soft handover is too high, the downlink control channel can be used to instruct the UE to reduce the uplink data transmission rate, without increasing the transmit power of the UE for which the radio link is established. The method therefore can ensure the system stability and the stability of subscriber data transmission rate, and improve the system capacity.

In addition, when the NodeB establishes a non-serving radio link for the UE, it can judge based on the present consumption situation of the E-DPDCH demodulation resources. If the free E-DPDCH demodulation resources are relatively less, only a control channel is established. If the free E-DPDCH demodulation resources are relatively more, an E-DPDCH for receiving uplink data can be established for the UE, so as to make full use of demodulation resources accessed by the uplink high-speed packet and avoid resource waste.

For the Enhanced-High-Speed Packet Access (E-HSPA) technique under research, even if the uplink macro diversity technique is canceled in the system architecture, the non-serving NodeB can still only establish a control plane connection to the UE upon the notification from the network side, so as to accurately estimate interference with the local cell from UEs in the neighboring cells to which the overlap area belongs, intervene and regulate the uplink transmit power of the UE by means of the downlink control channel, and attain the object of interference control. In addition, because only a control plane connection is established, the resources in the subscriber plane (e.g. NodeB resources and lub transmission resources, etc.) are not occupied, and therefore the system performance can be improved and the system stability can be achieved with less hardware resource consumption.

While the present invention has been illustrated and described with reference to some exemplary embodiments, the present invention is not limited to such embodiments. Those skilled in the art should appreciate that various variations and modifications can be made without departing from the scope of the present invention as defined by the accompanying claims.

## Claims

1. A neighboring cell interference suppression method for use in a mobile communication system, comprising the steps of:

   configuring, in a non-serving radio link established for a User Equipment UE in a cell, an uplink channel for estimation of contribution of the UE to uplink load in the cell and a downlink channel for control of transmit power of the UE; and
   estimating(440) the contribution of the UE to uplink load in the cell based on signals received through the uplink channel, and controlling(450) the transmit power of the UE by means of the downlink channel based on an estimation result.

2. The method according to claims 1, wherein the uplink channel comprises an uplink Dedicated Physical Control Channel DPCCH and an uplink Enhanced-Dedicated Physical Control Channel E-DPCCH; and the downlink channel comprises a downlink Relative Grant Channel RGCH.

3. The neighboring cell interference suppression method according to claim 1, wherein the downlink channel further comprises a downlink Fractional-Dedicated Physical Channel F-DPCH or a downlink Dedicated Physical Channel DPCH.

4. The method according to claim 2, further comprising receiving(410) a soft handover request from the UE before the non-serving radio link is established for the UE.

5. The method according to claim 4, wherein the step of configuring the channels in the non-serving radio link established for the UE comprises:

Configuring(430) both control channel and data channel in the non-serving radio link established for the UE if the quantity of resources currently used by the UE has not exceeded a predetermined threshold.

6. The method according to claim 1, further comprising:

Determining(510), at a network side, a base station that needs to establish the non-serving radio link for the UE based on a neighboring cell measurement report from the UE, and instructing the base station to establish a non-serving radio link for the UE.

7. The method according to any one of claims 1-6, further comprising:

configuring in the radio link a channel for data transmission when the UE is switched, if the radio link between the UE and a target cell only comprises the uplink channel for the estimation of contribution of the UE to the uplink load in the cell and the downlink channel for control of the transmit power of the UE.

8. The method according to claim 6, wherein, the radio link comprises an Enhanced-Dedicated Channel E-DCH; the associated channel for data transmission comprises an uplink Enhanced-Dedicated Physical Data Channel E-DPDCH.

9. The method according to any one of claims 4-6, wherein,
If the uplink channel for the UE is an uplink Enhanced-Dedicated Physical Data Channel E-DPDCH, the contribution to the uplink load equals to

$$\frac{(SIR_{DPCCH} + SIR_{E-DPCCH} + SIR_{E-DPDCH})}{1+(SIR_{DPCCH} + SIR_{E-DPCCH} + SIR_{E-DPDCH})};$$

If the uplink channel for the UE is an uplink Enhanced-Dedicated Physical Data Channel E-DPDCH and an uplink Dedicated Physical Data Channel,
the contribution to the uplink load equals to

$$\frac{(SIR_{DPCCH} + SIR_{DPDCH} + SIR_{E-DPCCH} + SIR_{E-DPDCH})}{1+(SIR_{DPCCH} + SIR_{DPDCH} + SIR_{E-DPCCH} + SIR_{E-DPDCH})};$$

wherein, $SIR_{DPCCH}$ is an SIR of the uplink Dedicated Physical Control Channel DPCCH, $SIR_{E-DPCCH}$ is an SIR of the uplink Enhanced-Dedicated Physical Control Channel E-DPCC, $SIR_{E-DPDCH}$ is an SIR of the uplink Enhanced-Dedicated Physical Data Channel E-DPDCH, and $SIR_{DPDCH}$ is an SIR of the uplink Dedicated Physical Data Channel DPDCH.

10. A base station comprising:

a first channel establishing module(610), configured to establish, in a non-serving radio link established for a UE in a cell, an uplink channel for estimation of contribution of the UE to uplink load in the cell and a downlink channel for control of transmit power of the UE;
an estimate module(620), configured to estimate contribution of the UE to uplink load in the cell based on a signal received through the uplink channel established by the first channel establishing module; and
a control module(630), configured to control transmit power of the UE by means of the downlink channel based on an estimation result provided by the estimating module.

11. The base station according to claim 10, further comprising:

a first judge module(640), configured to judge whether, when the UE is switched, the radio link established between the UE and a target cell only comprises an uplink channel for estimation of the contribution of the UE to the uplink load in the cell and a downlink channel for control of the transmit power of the UE; and
a second channel establishing module(650), configured to establish in the radio link, an channel for data transmission for the UE according to an indication from the first judge module.

12. The base station according to claim 11, wherein, the radio link comprises an Enhanced Dedicated Channel, and the associated channel for data transmission comprises an uplink Enhanced Dedicated Physical Data Channel.

13. The base station according to claim 10, further comprising:

a second judge module(660), configured to judge whether the quantity of resources currently used by the UE has exceeded a preset threshold; and
a third channel establishing module(670), configured to set both control channel and data channel in the established non-serving radio link, if the second judge module determines that the amount of the resources currently used by the UE does not exceed a predetermined threshold.

14. The base station according to claim 10, wherein, the radio link comprises an Enhanced-Dedicated Channel; the uplink channel comprises an uplink Dedicated Physical Control Channel DPCCH and an uplink Enhanced Dedicated Physical Control Channel E-DPCCH, the downlink channel comprises a downlink Relative Grant Channel RGCH.

15. A mobile communication system, **characterized by** comprising: a base station according to claim 10 and a UE communicating with the base station.

**Patentansprüche**

1. Nachbarzellen-Störungsunterdrückungsverfahren zur Verwendung in einem Mobilkommunikationssystem, mit den folgenden Schritten:

Konfigurieren eines Aufwärtsstreckenkanals in einer nicht versorgenden Funkstrecke, die für ein Benutzergerät UE in einer Zelle hergestellt wird, zur Schätzung des Beitrags des UE zu der Aufwärtsstreckenlast in der Zelle und eines Abwärtsstreckenkanals zur Regelung der Sendeleistung des UE; und
Schätzen (440) des Beitrags des UE zu der Aufwärtsstreckenlast in der Zelle auf der Basis von durch den Aufwärtsstreckenkanal empfangenen Signalen und Regeln (450) der Sendeleistung des UE mittels des Abwärtsstreckenkanals auf der Basis eines Schätzungsergebnisses.

2. Verfahren nach Anspruch 1, wobei der Aufwärtsstreckenkanal einen Dedicated Physical Control Channel DPCCH der Aufwärtsstrecke und einen Enhanced-Dedicated Physical Control Channel E-DPCCH der Aufwärtsstrecke umfasst und der Abwärtsstreckenkanal einen Relative Grant Channel RGCH der Abwärtsstrecke umfasst.

3. Nachbarzellen-Störungsunterdrückungsverfahren nach Anspruch 1, wobei der Abwärtsstreckenkanal ferner einen Fractional-Dedicated Physical Channel F-DPCH der Abwärtsstrecke oder einen Dedicated Physical Channel DPCH der Abwärtsstrecke umfasst.

4. Verfahren nach Anspruch 2, ferner mit dem Schritt des Empfangens (410) einer Soft-Handover-Anforderung von dem UE, bevor die nicht versorgende Funkstrecke für das UE hergestellt wird.

5. Verfahren nach Anspruch 4, wobei der Schritt des Konfigurierens der Kanäle in der für das UE hergestellten nicht versorgenden Funkstrecke Folgendes umfasst:

Konfigurieren (430) sowohl des Steuerkanals als auch des Datenkanals in der für das UE hergestellten nicht versorgenden Funkstrecke, wenn die gerade von dem UE verwendete Menge von Betriebsmitteln eine vorbestimmte Schwelle nicht überschritten hat.

6. Verfahren nach Anspruch 1, ferner mit den folgenden Schritten:

Bestimmen (510) einer Basisstation, die die nicht versorgende Funkstrecke für das UE herstellen muss, auf einer Netzseite auf der Basis eines Nachbarzellen-Messungsberichts von dem UE und Anweisen der Basisstation, eine nicht versorgende Funkstrecke für das UE herzustellen.

7.  Verfahren nach einem der Ansprüche 1-6, ferner mit dem folgenden Schritt:

   Konfigurieren eines Kanals für Datenübertragung in der Funkstrecke, wenn das UE gewechselt wird, wenn die Funkstrecke zwischen dem UE und einer Zielzelle nur den Aufwärtsstreckenkanal zur Schätzung des Beitrags des UE zu der Aufwärtsstreckenlast in der Zelle und den Abwärtsstreckenkanal zur Regelung der Sendeleistung des UE umfasst.

8.  Verfahren nach Anspruch 6, wobei die Funkstrecke einen Enhanced-Dedicated Channel E-DCH umfasst; und der assoziierte Kanal zur Datenübertragung einen Enhanced-Dedicated Physical Data Channel E-DPDCH der Aufwärtsstrecke umfasst.

9.  Verfahren nach einem der Ansprüche 4-6, wobei
   wenn der Aufwärtsstreckenkanal für das UE ein Enhanced-Dedicated Physical Data Channel E-DPDCH der Aufwärtsstrecke ist, der Beitrag zu der Aufwärtsstreckenlast gleich

   $$\frac{(SIR_{DPCCH} + SIR_{E-DPCCH} + SIR_{E-DPDCH})}{1 + (SIR_{DPCCH} + SIR_{E-DPCCH} + SIR_{E-DPDCH})} \text{ ist,}$$

   wenn der Aufwärtsstreckenkanal für das UE ein Enhanced-Dedicated Physical Data Channel E-DPDCH der Aufwärtsstrecke und ein Dedicated Physical Data Channel der Aufwärtsstrecke ist, der Beitrag zu der Aufwärtsstreckenlast gleich

   $$\text{kenlast gleich } \frac{(SIR_{DPCCH} + SIR_{DPDCH} + SIR_{E-DPCCH} + SIR_{E-DPDCH})}{1 + (SIR_{DPCCH} + SIR_{DPDCH} + SIR_{E-DPCCH} + SIR_{E-DPDCH})} \text{ ist;}$$

   wobei $SIR_{DPCCH}$ ein SIR des Dedicated Physical Control Channel DPCCH der Aufwärtsstrecke, $SIR_{E-DPCCH}$ ein SIR des Enhanced-Dedicated Physical Control Channel C-DPCCH der Aufwärtsstrecke, $SIR_{E-DPDCH}$ ein SIR des Enhanced-Dedicated Physical Data Channel E-DPDCH der Aufwärtsstrecke und $SIR_{DPDCH}$ ein SIR des Dedicated Physical Data Channel DPDCH der Aufwärtsstrecke ist.

10. Basisstation, umfassend:

   ein erstes Kanalherstellungsmodul (610), das dafür ausgelegt ist, in einer nicht versorgenden Funkstrecke, die für ein UE in einer Zelle hergestellt wird, einen Aufwärtsstreckenkanal zur Schätzung des Beitrags des UE zu der Aufwärtsstreckenlast in der Zelle und einen Abwärtsstreckenkanal zur Regelung der Sendeleistung des UE herzustellen;
   ein Schätzmodul (620), das dafür ausgelegt ist, den Beitrag des UE zu der Aufwärtsstreckenlast in der Zelle auf der Basis eines Signals zu schätzen, das durch den durch das erste Kanalherstellungsmodul hergestellten Aufwärtsstreckenkanal empfangen wird; und
   ein Regelmodul (630), das dafür ausgelegt ist, die Sendeleistung des UE mittels des Abwärtsstreckenkanals auf der Basis eines durch das Schätzungsmodul bereitgestellten Schätzungsergebnisses zu regeln.

11. Basisstation nach Anspruch 10, ferner umfassend:

   ein erstes Beurteilungsmodul (640), das dafür ausgelegt ist, zu beurteilen, ob, wenn das UE gewechselt wird, die zwischen dem UE und einer Zielzelle hergestellte Funkstrecke nur einen Aufwärtsstreckenkanal zur Schätzung des Beitrags des UE zu der Aufwärtsstreckenlast in der Zelle und einen Abwärtsstreckenkanal zur Regelung der Sendeleistung des UE umfasst; und
   ein zweites Kanalherstellungsmodul (650), das dafür ausgelegt ist, in der Funkstrecke einen Kanal zur Datenübertragung für das UE gemäß einer Indikation aus dem ersten Beurteilungsmodul herzustellen.

12. Basisstation nach Anspruch 11, wobei die Funkstrecke einen Enhanced Dedicated Channel umfasst und der assoziierte Kanal zur Datenübertragung einen Enhanced Dedicated Physical Data Channel der Aufwärtsstrecke umfasst.

13. Basisstation nach Anspruch 10, ferner umfassend:

ein zweites Beurteilungsmodul (660), das dafür ausgelegt ist, zu beurteilen, ob die gerade von dem UE verwendete Menge von Betriebsmitteln eine voreingestellte Schwelle überschritten hat; und

ein drittes Kanalherstellungsmodul (670), das dafür ausgelegt ist, sowohl den Steuerkanal als auch den Datenkanal in der hergestellten nicht versorgenden Funkstrecke einzurichten, wenn das zweite Beurteilungsmodul bestimmt, dass die gerade von dem UE verwendete Menge von Betriebsmitteln eine vorbestimmte Schwelle nicht überschreitet.

**14.** Basisstation nach Anspruch 10, wobei die Funkstrecke einen Enhanced-Dedicated Channel umfasst; der Aufwärtsstreckenkanal einen Dedicated Physical Control Channel DPCCH der Aufwärtsstrecke und einen Enhanced Dedicated Physical Control Channel E-DPCCH der Aufwärtsstrecke umfasst; und der Abwärtsstreckenkanal einen Relative Grant Channel RGCH der Abwärtsstrecke umfasst.

**15.** Mobilkommunikationssystem, **dadurch gekennzeichnet, dass** es Folgendes umfasst:

eine Basisstation nach Anspruch 10 und ein UE, das mit der Basisstation kommuniziert.

### Revendications

**1.** Procédé de suppression d'interférences de cellules voisines destiné à être utilisé dans un système de communication mobile, comprenant les étapes suivantes :

configuration, dans une liaison radio non de desserte établie pour un Equipement Utilisateur, UE, dans une cellule, d'un canal de liaison montante pour l'estimation de la contribution de l'UE à la charge de liaison montante dans la cellule et d'un canal de liaison descendante pour la commande de la puissance d'émission de l'UE ; et estimation (440) de la contribution de l'UE à la charge de liaison montante dans la cellule d'après des signaux reçus par le biais du canal de liaison montante, et commande (450) de la puissance d'émission de l'UE au moyen du canal de liaison descendante en fonction d'un résultat d'estimation.

**2.** Procédé selon la revendication 1, dans lequel le canal de liaison montante comprend un Canal de Commande Physique Dédié, DPCCH, de liaison montante et un Canal de Commande Physique Dédié Rehaussé, E-DPCCH, de liaison montante ; et le canal de liaison descendante comprend un Canal d'Accord Relatif, RGCH, de liaison descendante.

**3.** Procédé de suppression d'interférences de cellules voisines selon la revendication 1, dans lequel le canal de liaison descendante comprend en outre un Canal Physique Dédié Fractionnel, F-DPCH, de liaison descendante ou un Canal Physique Dédié, DPCH, de liaison descendante.

**4.** Procédé selon la revendication 2, comprenant en outre la réception (410) d'une requête de transfert temporaire depuis l'UE avant l'établissement de la liaison radio non de desserte pour l'UE.

**5.** Procédé selon la revendication 4, dans lequel l'étape de configuration des canaux dans la liaison radio non de desserte établie pour l'UE comprend :

la configuration (430) à la fois du canal de commande et du canal de données dans la liaison radio non de desserte établie pour l'UE si la quantité de ressources présentement utilisées par l'UE n'a pas dépassé un seuil prédéterminé.

**6.** Procédé selon la revendication 1, comprenant en outre :

la détermination (510), côté réseau, d'une station de base qui doit établir la liaison radio non de desserte pour l'UE en fonction d'un rapport de mesure de cellules voisines provenant de l'UE, et l'instruction à la station de base d'établir une liaison radio non de desserte pour l'UE.

**7.** Procédé selon l'une quelconque des revendications 1 à 6, comprenant en outre:

la configuration dans la liaison radio d'un canal de transmission de données quand l'UE est allumé, si la liaison radio entre l'UE et une cellule cible comprend uniquement le canal de liaison montante pour l'estimation de la contribution de l'UE à la charge de liaison montante dans la cellule et le canal de liaison descendante pour la commande de la puissance d'émission de l'UE.

**8.** Procédé selon la revendication 6, dans lequel la liaison radio comprend un Canal Dédié Rehaussé, E-DCH ; le canal associé de transmission de données comprend un Canal de Données Physique Dédié Rehaussé, E-DPDCH.

**9.** Procédé selon l'une quelconque des revendications 4 à 6, dans lequel si le canal de liaison montante pour l'UE est un Canal de Données Physique Dédié Rehaussé, E-DPDCH, de liaison montante, la contribution à la charge de liaison montante est égale à

$$\frac{(SIR_{DPCCH} + SIR_{E-DPCCH} + SIR_{E-DPDCH})}{1 + (SIR_{DPCCH} + SIR_{E-DPCCH} + SIR_{E-DPDCH})};$$

si le canal de liaison montante pour l'UE est un Canal de Données Physique Dédié Rehaussé, E-DPDCH, de liaison montante et un Canal de Données Physique Dédié de liaison montante, la contribution à la charge de liaison montante est égale à

$$\frac{(SIR_{DPCCH} + SIR_{DPDCH} + SIR_{E-DPCCH} + SIR_{E-DPDCH})}{1 + (SIR_{DPCCH} + SIR_{DPDCH} + SIR_{E-DPCCH} + SIR_{E-DPDCH})};$$

où $SIR_{DPCCH}$ est un rapport signal utile/signal brouilleur (SIR) du Canal de Commande Physique Dédié, DPCCH, de liaison montante, $SIR_{E-DPCCH}$ est un SIR du Canal de Commande Physique Dédié Rehaussé, E-DPCCH, de liaison montante, $SIR_{E-DPDCH}$ est un SIR du Canal de Données Physique Dédié Rehaussé, E-DPDCH, de liaison montante, et $SIR_{DPDCH}$ est un SIR du Canal de Données Physique Dédié, DPDCH, de liaison montante.

**10.** Station de base comprenant :

un premier module d'établissement de canaux (610), configuré pour établir, dans une liaison radio non de desserte établie pour un UE dans une cellule, un canal de liaison montante pour l'estimation de la contribution de l'UE à la charge de liaison montante dans la cellule et un canal de liaison descendante pour la commande de la puissance d'émission de l'UE ;
un module d'estimation (620), configuré pour estimer la contribution de l'UE à la charge de liaison montante dans la cellule d'après un signal reçu par le biais du canal de liaison montante établi par le premier module d'établissement de canaux ; et
un module de commande (630), configuré pour commander la puissance d'émission de l'UE au moyen du canal de liaison descendante en fonction d'un résultat d'estimation fourni par le module d'estimation.

**11.** Station de base selon la revendication 10, comprenant en outre :

un premier module de jugement (640), configuré pour juger si, quand l'UE est allumé, la liaison radio établie entre l'UE et une cellule cible comprend uniquement ou non un canal de liaison montante pour l'estimation de la contribution de l'UE à la charge de liaison montante dans la cellule et un canal de liaison descendante pour la commande de la puissance d'émission de l'UE ; et
un deuxième module d'établissement de canaux (650), configuré pour établir, dans la liaison radio, un canal de transmission de données pour l'UE en fonction d'une indication fournie par le premier module de jugement.

**12.** Station de base selon la revendication 11, dans laquelle la liaison radio comprend un Canal Dédié Rehaussé, et le canal associé de transmission de données comprend un Canal de Données Physique Dédié Rehaussé de liaison montante.

**13.** Station de base selon la revendication 10, comprenant en outre :

un second module de jugement (660), configuré pour juger si la quantité de ressources présentement utilisées par l'UE a dépassé ou non un seuil préétabli ; et

un troisième module d'établissement de canaux (670), configuré pour établir à la fois le canal de commande et le canal de données dans la liaison radio non de desserte établie, si le second module de jugement détermine que la quantité de ressources présentement utilisées par l'UE ne dépasse pas un seuil prédéterminé.

**14.** Station de base selon la revendication 10, dans laquelle la liaison radio comprend un Canal Dédié Rehaussé ; le canal de liaison montante comprend un Canal de Commande Physique Dédié, DPCCH, de liaison montante et un Canal de Commande Physique Dédié Rehaussé, E-DPCCH, de liaison montante ; le canal de liaison descendante comprend un Canal d'Accord Relatif, RGCH, de liaison descendante.

**15.** Système de communication mobile, **caractérisé en ce qu'**il comprend : une station de base selon la revendication 10 et un UE communiquant avec la station de base.

Fig.1

Fig.2

Fig.3

Begin

NodeB establishes a non-serving radio link
for UE when it receives a soft handover
request from UE
410

Judge whether the
quantity of resources used presently has exceeded a
first preset threshold
420

Yes

No

NodeB configures both control channel and
data channel in radio link
430

NodeB estimates contribution of UE to
uplink load in cell based on signals received
through DPCCH and E-DPCCH
440

NodeB controls transmit power of UE
through downlink E-RGCH based on
estimation result
450

End

Fig.4

Begin

Network side determines NodeB which needs to establish a new non-serving radio link for UE, based on measurement report of neighboring cell of UE

510

NodeB establishes new non-serving radio link for UE

520

NdoeB estimates contribution of UE to uplink load in cell based on signals received through uplink channel

530

NodeB controls transmit power of UE through down-link based on estimation result

540

End

Fig.5

First Channel Establishing Module

First Judge Module

610    640

Estimate Module

Second Channel Establishing Module

620

650

Control Module

630

Fig.6

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040160914 A1


### Non-patent literature cited in the description

- Enhanced Uplink-Scheduling. **ERICSSON.** 3GPP DRAFT; R1-040683, 3RD GENERATION PART-NERSHIP PROJECT(3GPP). MOBILE COMPE-TENCE CENTRE, 18 June 2004, vol. RAN WG1